# EUROPEAN PATENT SPECIFICATION

(11) **EP 3 158 307 B1**
(45) Date of publication and mention of the grant of the patent: **04.08.2021**
(21) Application number: 15808981.3
(22) Date of filing: 17.06.2015
(51) Int. Cl.: G01M 5/00, G01M 7/08

(54) **SELF-CONTAINED RAPID MODAL TESTING SYSTEM FOR HIGHWAY BRIDGES**
EIGENSTÄNDIGES SCHNELLES MODALES TESTSYSTEM FÜR AUTOBAHNBRÜCKEN
SYSTÈME DE TEST MODAL RAPIDE AUTONOME POUR PONTS D'AUTOROUTE

(30) Priority: 17.06.2014 US 201462013205 P; 07.10.2014 US 201462060840 P
(43) Date of publication of application: 26.04.2017
(73) Proprietor: Drexel University, Philadelphia, PA 19104 (US)
(72) Inventor: MOON, Franklin Lehr, Mt. Laurel, NJ 08054 (US); DEVITIS, John, Philadelphia, PA 19145 (US); MASCERI, David Robert, Upper Holland, PA 19123 (US); AKTAN, Ahmet, Emin, Bala Cynwyd, PA 19004 (US); BUCHTER, Barry, Hatfield, PA 19440 (US); BASILY, Basily, Piscataway, NJ 08854-8018 (US); BRALEY, John Burton, Philadelphia, PA 19130 (US); ROMANO, Nicholas Paul, Philadelphia, PA 19123 (US)
(74) Representative: Busca, Andrea
(86) International application number: PCT/US2015/036115
(87) International publication number: WO 2015/195728

(56) References cited:
- CN-A- 103 792 055
- CN-A- 103 792 055
- CN-U- 203 310 598
- CN-U- 203 310 598
- KR-A- 20120 114 439
- US-A- 3 209 580
- US-A- 5 430 334
- US-A1- 2005 011 249
- US-B1- 7 900 498
- US-B1- 7 900 498
- US-B2- 8 036 760

## Description

### BACKGROUND

There are over 60,000 bridges in the United States that are posted for loads under the legal limit. Many of these structures are placed under load restrictions due to the inherent conservatism of the single-line girder rating method, which is widely used throughout the U.S. More advanced modeling and/or load testing procedures that often prove valuable in assessing critical or atypical structures may overcome this conservatism. Bridge owners, however, must balance the cost and time required by such refined methods, which often prove excessive and thus are seldom employed.

In addition, while static load tests directly measure in-situ characteristics of the bridge, they require full bridge closure, loaded and weighed trucks, and the acquisition of local and global responses using numerous sensors and data acquisition equipment. Due to this complexity, the time requirement for planning, executing, and analyzing the data hampers both the cost-effectiveness and the utility of such evaluations for emergencies. Alternatively, dynamic tests are capable of capturing both direct and indirect measures of global performance, with lower time requirements, but more significant user-expertise requirements than conventional static load testing. While this time-expertise trade-off does render dynamic testing slightly more economical, it remains too costly for widespread application to common highway bridges. As a result, bridge owners have limited options for quantitatively determining the health of a bridge population. Prior art documents relevant to the invention are the following patents: CN 203 310 598 U, CN 103 792 055 A and US 7 900 498 B1.

### SUMMARY OF THE EMBODIMENTS

The above-mentioned technical problems are solved by the invention as claimed in claim 1.

### BRIEF DESCRIPTION OF THE DRAWINGS

FIGS. 1 and 2 show the testing apparatus in use on a bridge.
FIG. 3 shows three components of the testing trailer.
FIGS. 4A-4D show views of the impact device.
FIGS. 5A and 5B show a schematic of the testing trailer.
FIGS. 6A and 6B show different views of the sensor assembly.
FIG. 7 shows the trailer with a schematic detail.
FIG. 8 shows the testing apparatus and certain remote components.
FIG. 9 shows an alternate embodiment of the sensor assembly.
FIGS. 10-12 show an alternate schematic view of the testing apparatus.
FIGS. 13-36 show screen shots, reports, and schematic input/output screens related to analysis of the test results.

### DETAILED DESCRIPTION OF THE EMBODIMENTS

### I. INTRODUCTION

The proposed apparatus and system may be referred to herein as the Targeted Hits to Measure Performance Responses (THMPR) system, provides cost-competitive bridge evaluation by pairing leading-edge technology with current structural engineering best practices. The THMPR system comprises of a modal testing device and custom semi-automated modal analysis software with the Rapid Automated Modeling for Performance of Structures (RAMPS) software for semi-automated finite element model development, model/experiment correlation, and live load simulation and rating. The following presents an overview of the current THMPR system (test device and methodology), as well as preliminary results from recent field trials in which modal parameters were extracted from a steel stringer bridge and comparison between the THMPR system and a traditional multi-reference impact test was carried out.

### II. THMPR SYSTEM

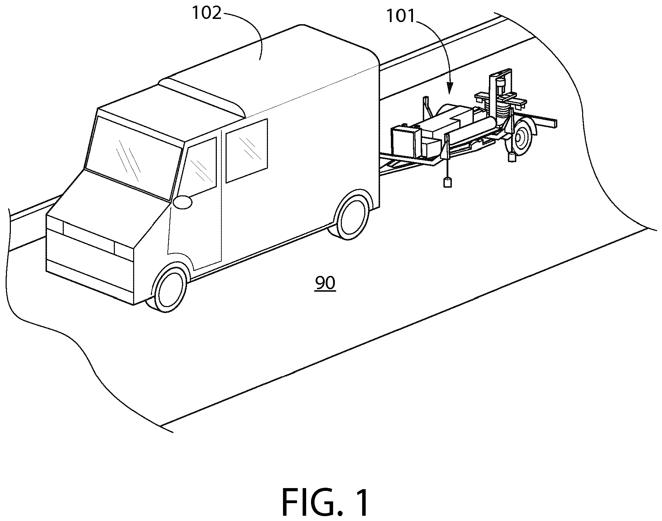

The THMPR system (FIG. 1) combines a self-contained rapid modal testing trailer 101 and streamlined data processing software to extract modal parameters of a structure, such as frequencies and modes shapes that may be used to determine anomalous behavior as well as provide experimental data for finite element model calibration. The system comprises a physical test device that uses a significantly reconfigured falling weight deflectometer trailer with modifications to (1) provide a single, large (∼30 kip) broadband impact source (focused under 50 Hz to 100 Hz depending on the bridge being tested), and (2) collect the resulting free-decay response of the bridge 90's surface in a spatially distributed manner (and in-turn be able to capture local mode shapes). A human (or automated or remote) driver guides the trailer 101 along the bridge deck 90 and operators may perform single-input-multiple-output (SIMO) impact testing at targeted locations to gather data.

The data may be wirelessly acquired at each location and passed to semi-automated modal processing software that performs (1) data quality checks, (2) frequency response function development, and (3) modal parameter estimation. The local mode shapes may be then linearly combined using selected stationary references previously secured along an available sidewalk (out of the way of traffic) and cabled to an independent, GPS-synchronized data acquisition (capable of streaming data wirelessly to the THMPR control van). The resulting global modal parameters may then be passed to the RAMPS software to develop a finite element FE model, correlated to the experimental results, and ultimately used to perform a refined American Association of State Highway and Transportation Organization AASHTO Load and Resistance Factor Rating (LRFR) of the structure.

### A. Modal Test Trailer

### A1.THMPR System - Description of Hardware Components

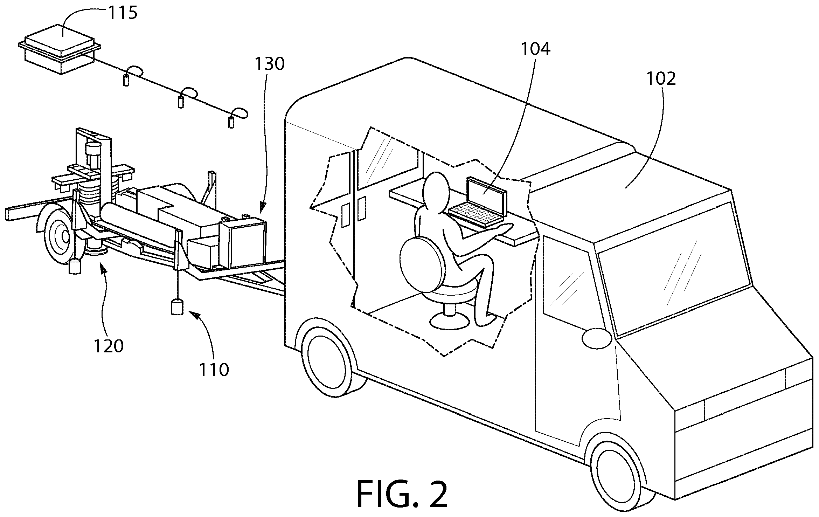

The THMPR testing trailer 101 delivers the fundamentals of modal impact testing (adequate excitation energy, broad-banded and spatially-distributed response measurement) while establishing ergonomic practices to ensure the operator can run a safe and quick test. FIG. 2 shows the modal testing trailer 101 in operation. The test trailer 101 may be towed to a bridge 90 via an appropriate vehicle 102 with a mobile workstation 104 in the rear. An operator may remotely connect to an onboard, reprogrammable micro-controller 130 to operate pneumatic, hydraulic, and measurement (data acquisition) control systems to conduct multiple Single-Input-Multiple-Output (SIMO) modal impact tests.

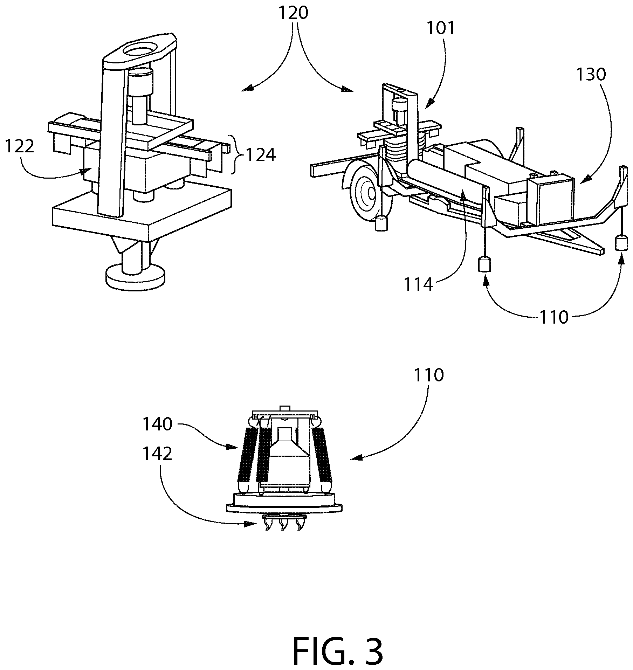

FIG. 3 shows a schematic of the current modal test trailer 101. Using, for example, a NI CompactRIO micro-controller 130 and pneumatic actuators 140, a local sensor array 110 presses spring loaded accelerometer housings 112 onto a bridge deck 90. A hydraulic control system 114 is then used to raise an impact carriage 124 with adjustable mass 122 and stiffness.

In use, the impact carriage 124 drops, impacts a column assembly that transmits the energy to the bridge deck 90, and rebounds upwards. The stiffness and mass of the impact carriage 124 may be tuned to generate force levels above 25kips (in order to overcome the presence of light truck traffic and thus not require lane closures) and a usable frequency band between 0-50Hz or 0-100Hz to focus the input energy within the bandwidth of the first fundamental modes of bridge being tested. A rebound control system achieves a single impulse and preserves data quality, that is, the system prevents the rebounding impact carriage 124 from delivering multiple impacts to the bridge, which would not permit free decay response to be captured. A sensing/control system using hall sensors 129 described below, detects the impact and triggers fast acting pneumatic actuators to extend upwards and catch the mass, preventing subsequent rebounds. The resulting free-decay vibrations are recorded for duration of 10 seconds (to capture the full response record and maintain a fine frequency resolution) and at a sampling rate of 3200Hz to ensure adequate characterization of the impulse signal. During testing, an independent data acquisition system using GPS synchronization records several stationary accelerometers (typically three per available sidewalk) to use as spatial and modal references for post processing analysis.

Once several impact sequences are conducted at a single location, an operator can raise the mobile sensing array 110 and move the trailer 101 to a new location on the bridge deck 90 to repeat the experimental process. During trailer 101's travel, a series of magnets and hall sensors located along the circumference of the trailer wheels record wheel rotations to calculate linear distance of the trailer from a reference point - only requiring the operator to manually record lane position to determine local positioning of the trailer at each impact location.

The components of the test trailer 101 may comprise:
- a single, repeatable impact device with focused frequency band 120,
- a mobile, rapidly deployable sensing array 110,
- an integrated data acquisition and machine control system 130,
- a wireless stationary reference sensing and data acquisition system 115,
- a local proximity system.

### A2. Excitation Source and Rebound Control

To provide single impulse control and preserve proper characterization of the frequency domain as well as preserve the ability to directly calculate modal mass (and thus modal flexibility), a single impulse may be achieved through the use of a pneumatic rebound control system within the impact device 120. The trailer 101's rebound control system's components that will be discussed in greater detail are shown in FIG. 3, which shows the trailer 101, impact device 120, and retractable sensor assembly 140.

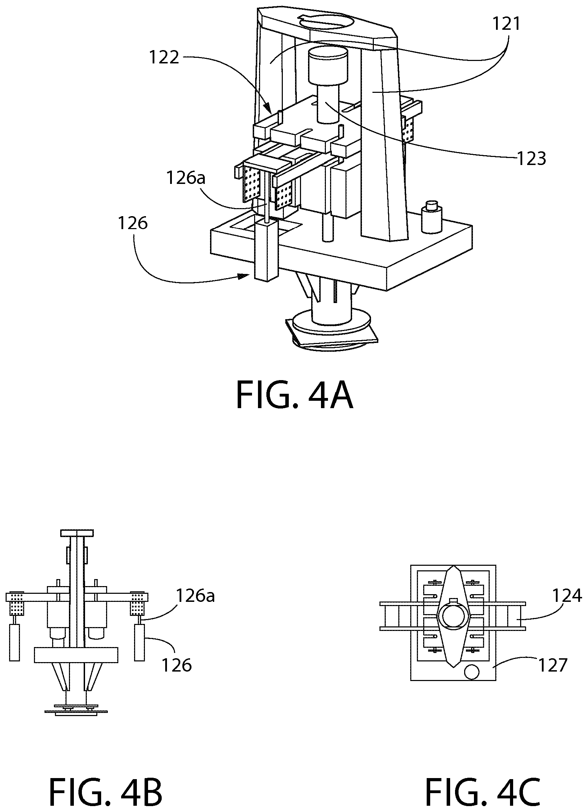

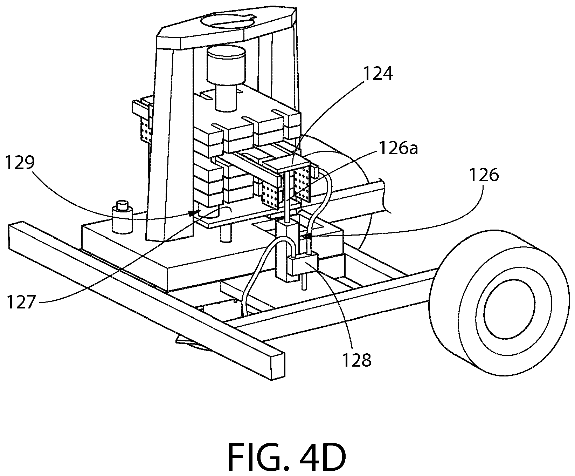

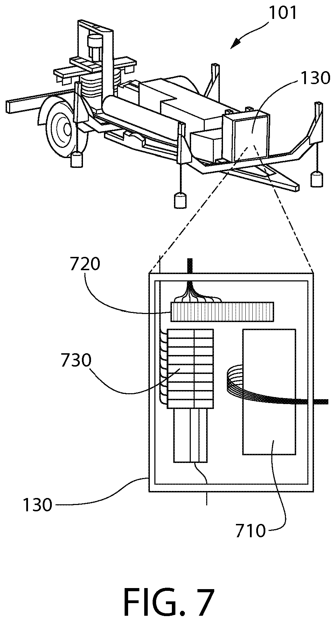

With reference to FIGS. 4A, 4B, 4C, and 4D, the impact device 120's components comprise a fast acting Norgren Series 90000 compact actuator (or actuators-2 are shown) 126, two Parker 3-way valves 128, a compressed hydraulic system 114, a Hamlin sinking gate hall sensor 129, and an NI cRIO controller (710 in FIG. 7). Other similar components may be used. The cRIO controller powers the system while continuously polling the output voltage of the hall sensor 129 located on the strike surface 127 of the impact device 120.

During a drop sequence, the mass 122 enters free fall and accelerates towards the strike surface 127. Once the mass 122 contacts the strike surface 127, the output voltage of the hall sensor 129 drops to zero which autonomously informs the cRIO of an impact. The cRIO then initiates the rebound control sequence activating each 3-way valve 128. This releases 100psi of air pressure (or whatever equivalent is required) to the actuators 126 causing actuator rods 127 to rapidly extend and follow the rebounding mass 122 upwards. The extended actuator rods 127 meet the impact carriages 124, halting the mass 122 at its approximate, if not exact, apex. The mass 122 may be held at this position for 10 seconds to allow acquisition of the bridge 90's free-decay vibrations without subsequent input from rebounds. The 3-way valves 128 are then returned to their original position, which bleeds the actuators 126 and completes the rebound control sequence.

During raising and dropping of the mass 122, linear guide rails 121 keep the mass aligned and falling vertically. The mass 122 may be held by a mechanical locking collar located at the top of the center column assembly of the impact carriage.

### A3. Mobile Sensing Array

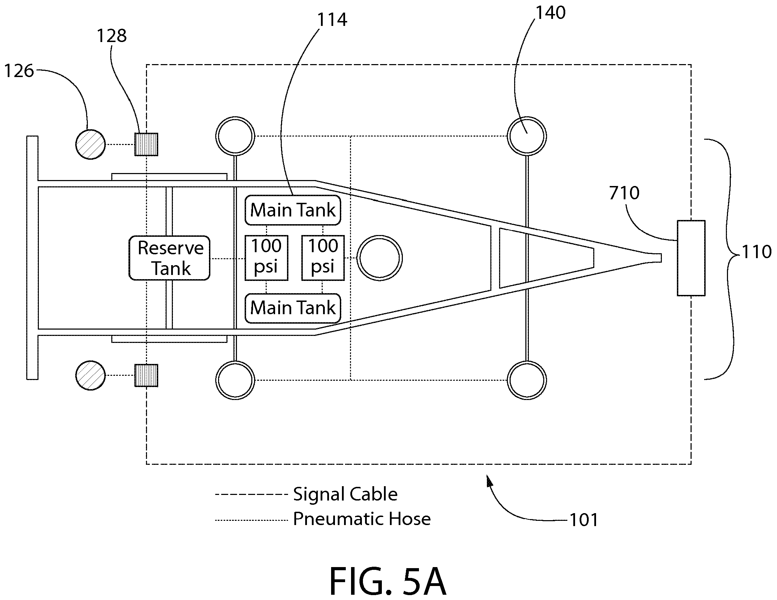

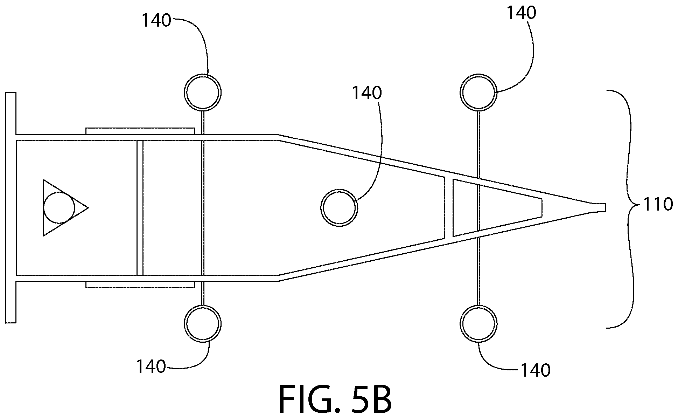

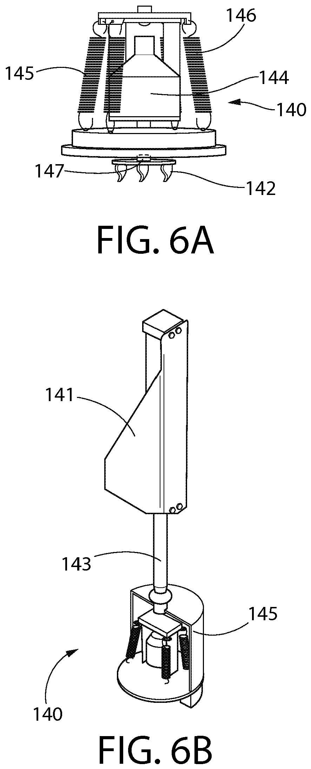

FIGS 5A and 5B show a functional diagram of the mobile sensing array 110 that is capable of capturing the global vibrations of the test bridge 90 with adequate spatial resolution, and also capable of rapid deployment while maintaining driving safety when the trailer 101 is towed to the test site and between each test location. A total of six accelerometers 144 in a spread pattern spanning approximately 6'x11' may be used to provide practical yet adequate spatial resolution. As shown in detail in FIGS 6A and 6B, the accelerometer sensors 140 may be automatically extended and retracted using pneumatic actuators 141 to extend and press each sensor assembly 140 onto the bridge deck until its stabilizer foot 142 engages the deck 90.

The accelerometer sensor housings 140 may contain a floating PCB 393A03 accelerometer 144 attached by pre-loaded springs 146 (four shown). A threaded aluminum rod 147 with a three-pronged foot 142 is secured to the bottom of the accelerometer 140 and provides a rigid, stable base. A thick neoprene ring (not pictured) is provided around the underside circumference of the sensor housing as a contact surface to eliminate any erroneous input from local sensor assembly/bridge deck contact. When the accelerometer sensor housing 140 is pressed onto the bridge deck 90, the springs 146 in the housing 140 extend and isolate the accelerometer 140 from the trailer 101 and sensor assembly 110, which aids in the elimination of extraneous noise. Additionally, pre-stressing the accelerometer 140 in this way keeps the sensor 140 in direct contact with the bridge deck 90 during measurement of the bridge's vibration free-decay and prevents uplift at acceleration levels greater than 1g (by engaging the trailer as a reaction mass).

### A4. Integrated Data Acquisition and Controls

Custom data acquisition code and hydraulic and pneumatic control code may remotely operate the mobile trailer 101 and record the induced global vibrations. Autonomous control is important in accelerating the speed at which each SIMO test is conducted as well as maintaining safe conditions for the operator (namely, the ability to operate the trailer 101 without being subjected to passing vehicles). As shown in FIG. 7A, a National Instruments (NI) CompactRIO (cRIO or other)) controller 710 may be mounted in an environmentally protected enclosure on the trailer 101 and provides both the control and data acquisition solution. The controller may comprise at least hall sensors 720, controlled hydraulics/pneumatics 730 that connect to the actuators 141

Using the programming environment of Labview or similar program, the operator may reside in the towing vehicle while using a PC connected to the NI cRIO 710 via Ethernet (or other connection) to remotely deploy the accelerometers 140 from the accelerometer actuator 141 which may extend the accelerometer sensor 140 that resides in housing 145 from an actuator 141 via rod 143. The operator also may operate the impact hydraulic device 120 and record the global response. The data acquisition may record each desired input and response channel synchronously, sample at a rate large enough to adequately describe the input force characteristics (for example with a 1,200Hz-51,200Hz sampling frequency), and have high storage capacity for larger data records, allowing adequate frequency resolution of the acquired response signals.

### A5. Wireless Stationary Reference

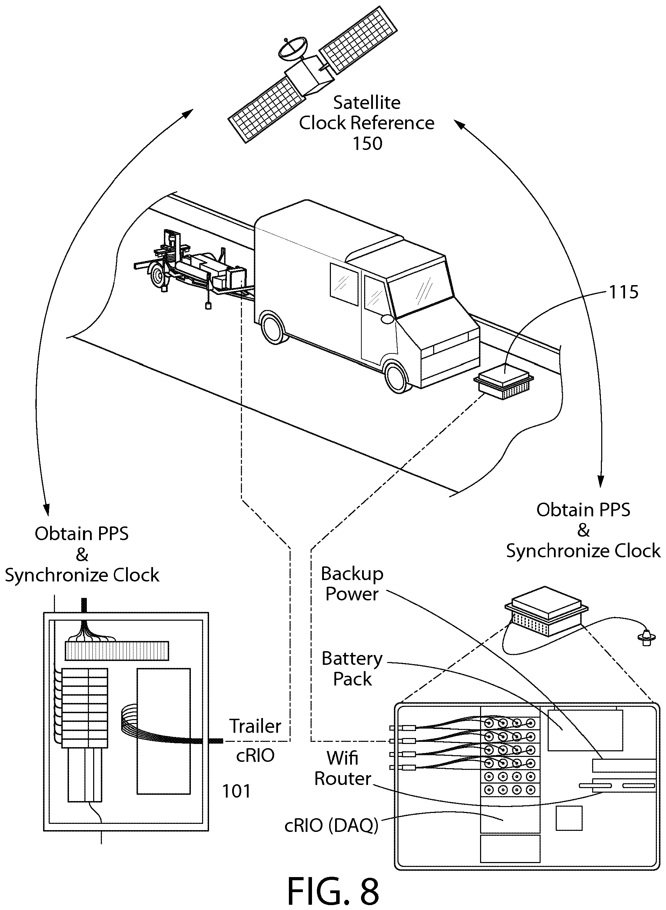

FIG. 8 shows wireless stationary references or data acquisition system 115 that may be required to provide relative phase and magnitude information between local tests to permit sub-structure integration in the post-processing portion of analysis. Sub-structure integration is the 'stitching' or combining of multiple local modeshapes into a complete set of global modeshapes. The stationary references may be recorded synchronously with the trailer measurements. As shown in FIG. 8, an independent data acquisition system similar to the one equipped on the trailer 101 may be employed and synchronized with the trailer data acquisition system at the clock level via GPS 150. Multiple reference sensors 160 may be secured to the bridge 90 along a sidewalk or shoulder to ensure each modeshape has at least one reference sensor 160 at a point of high modal amplitude for each mode. This enforces a high signal to noise ratio when combining the independent shapes and preserves the integrity of the post-processing analysis. Hot glue adhesive (or other appropriate attachment mechanism) may be used to attach the reference sensors 160 to the bridge deck 90.

### B. THMPR Device Modifications

Bridges of varying geometry, material types, skew angle, etc. have unique dynamic behaviors. Although the system described above may perform adequately for the majority of these highway bridges, the modifications described in the following sections may allow the THMPR system customization for field testing to meet the specific needs of bridges of varying types. These modifications may improve the overall performance of the forced vibration testing.

### B1. Modified Impact Device

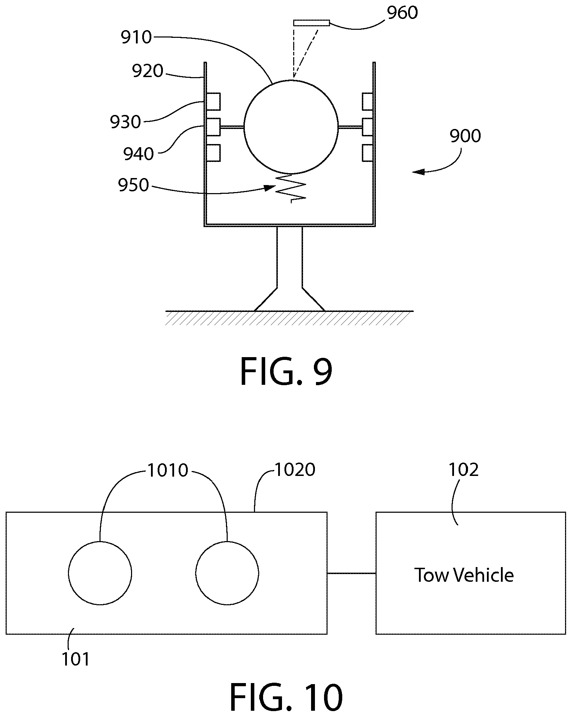

As shown in FIG. 9, a modified impact device 900 contains an adjustable moving mass 910 rigidly attached to linear motion guide rails 920 through low friction guides 930 and spring-loaded/pneumatic brakes 940. The mass 910 may be capable of rising to an adjustable height of 0-2ft (or other) and being released to enter free fall and eventually contact the strike plate. An impact surface of adjustable stiffness 950 may make contact with the strike plate and transmit the impulse energy to the bridge deck. A laser distance sensor 960 may continuously track the relative distance of the moving mass 910. At the apex of the first rebound the spring-loaded pneumatic brakes 940 may be engaged to halt the mass 910. This ensures a single impulse (i.e. no subsequent rebounds after the initial impulse). The amount of mass and stiffness of the contact surface shall be capable of autonomous field adjustment as the combination of these two parameters controls the amplitude and frequency content of the impulse signal. This may allow the operator to choose an optimal combination of mass and stiffness to tailor the impulse force amplitude and usable frequency content to meet the specific needs (based upon natural frequency analyses of the a priori finite element model developed within the RAMPS software suite) of the bridge being testing.

### B2. Second Impact Device

According to the invention and as shown in the schematic representation of FIG. 10, the THMPR system trailer 102 comprises a second impact device 1010 and may be used sequentially. Once the trailer 101 is moved to a selected location, the sensor array 110 is deployed. Each impact device 1020 is then sequentially used to deliver impulse forces at each respective spatial location and independent response records are acquired at the impact locations as well as the deployed sensor array 110. This may increase the functionality of the testing protocols by 1) reducing the loss of data quality when conducting an impact at or near a nodal point, 2) providing an additional impact location reference for more robust modal parameter estimation, and 3) establishing linearity of the system by permitting the evaluation of reciprocity.

The previously described THMPR system contains only one impact device and due to this is only capable of performing single input multiple output (SIMO) modal analysis. This is a limitation of the current system as any impact at or near a nodal point for a specific mode of interest may not fully excite that mode.

The result is a decrease of the signal to noise ratio, which causes a decrease of data quality of the local modal parameters extracted for that mode. This may lead to the rejection of that local mode shape from integration within the global mode shape, which often requires additional impact locations to be selected to ensure adequate data quality and ultimately adequate global spatial resolution for all global modes of interest.

The second impact device transforms the current SIMO testing method into a multiple input multiple output (MIMO) testing method. This allows the use of more robust modal parameter estimation algorithms and ultimately the solution of two modal vectors for each frequency (as opposed to the single modal vector solution at each frequency line for SIMO testing). This can be valuable when dealing with structures containing closely spaced modes because the operator can track the evolution and contribution of a particular mode to the measured response at each frequency line.
Lastly, the inclusion of a second impact device and measurement of the output signals at these locations allows the evaluation of reciprocity. Reciprocity is a principle that states for linear systems a response at location A caused by an excitation at location B, is exactly equal to a response at location B caused by an excitation at location A. Linearity is a key assumption of modal analysis which, when violated, causes inaccurate results. By permitting the evaluation of reciprocity, the linearity of the structure can be verified and thus the appropriateness of modal testing can be reliably established yielding a higher confidence in the results obtained by the THMPR system.

### B3. Fully Adjustable Sensing Array

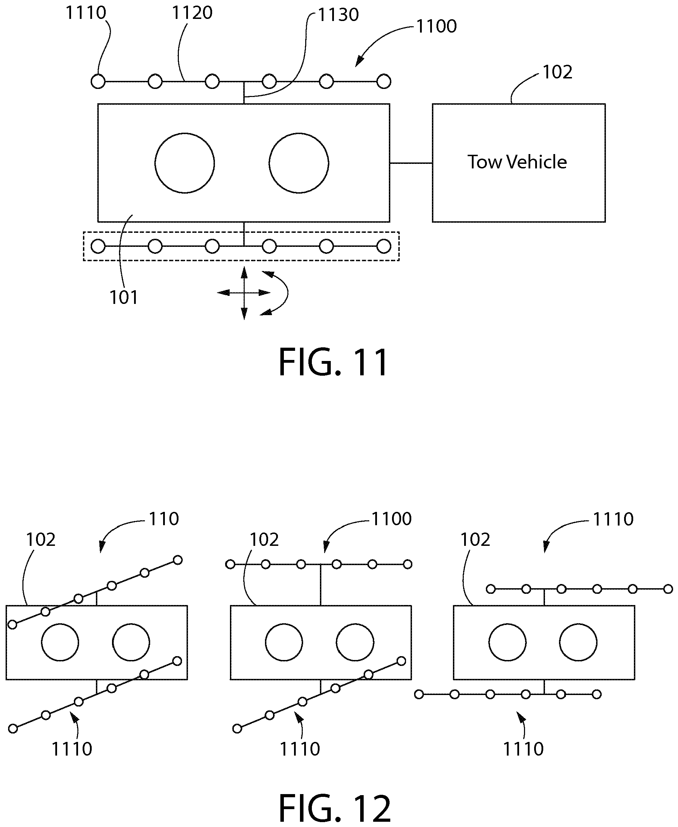

According to the invention and as shown in FIG. 11, the sensor assembly of the THMPR system is in the form of an adjustable sensing array. Local sensors 1110 are spaced along outer sensor array arms 1120 and extended from the trailer 101 by an adjustable inner sensor arm 1030. The inner sensor arms may be able to rotate as well as extend and retract longitudinally and transversely. This results in a configurable local sensor array able to be custom-tailored to unique skew angles, and other considerations of specific bridge geometries. The extension of the outer sensor arms 1120 allows a larger local sensor foot print (requiring less total impact locations and reducing total test time) that may be extended outside of a traffic lane (while the bridge is absent of passing vehicles). Retraction of the sensor array may allow the THMPR system to stay within the confines of traffic lanes during travel or while conducting tests on a bridge open to vehicle traffic. Examples of this functionality are presented in FIG. 12.

### II. RAPID MODELING OF PERFORMANCE OF STRUCTURES

### A. Introduction

RAMPS, or Rapid Automated Modeling of Performance of Structures, is a computer program that can facilitate the rapid creation, calibration, and load effect simulation of finite element (FE) models of bridges.

The RAMPS software may include three main modules packaged within a single graphical user interface (GUI) that leverage the application programming interface (API) between MATLAB and Strand7. MATLAB, a numerical computing environment, allows the user to write extensive programs, or scripts, using the MATLAB programming language. Strand7 is an existing FE modeling and analysis software package. The Strand7 API allows for communication and control of the FE modeling program through MATLAB scripts without the need for the FE program GUI; it also provides additional features that are inaccessible via normal GUI-based operation.

The first module of RAMPS may provide assistance to the user in the semi-automatic creation of a FE bridge model. Given the somewhat regular details of structural design and symmetric geometries of common highway bridges, features such as roadway geometry, girder type and spacing, cross-bracing configuration, and bearing type may be entered by the user to create a 3D geometric FE model in a matter of minutes. Normally, model creation takes a longer time because it involves element-by-element creation and manipulation by a human user via a GUI. The RAMPS model creation module may estimate many unknown structural features for the user in cases of incomplete information. Furthermore, the RAMPS software may estimate "likely" bridge details and configuration based on the design codes employed at the time bridge was constructed for any structure that is listed in the National Bridge Inventory (NBI) database.

A second RAMPS module provides users model-experiment correlation (also known as model fitting, model calibration, model updating, and parameter estimation) to estimate various uncertain parameters. Normally, FE models are representative of only what is known about the geometry, detailing, and material of a structure and are considered *a priori.* Model fitting implemented through parameter estimation allows for the gap between a bridge and an *a priori* FE model to be narrowed. A model's predictive ability can be enhanced by what is known as structural identification: testing the structure the model represents and then updating a set of parameters-boundary conditions, continuity conditions, and material properties-in order to bring the model into better agreement with the responses obtain from the physical structure. The higher degree of predictive fidelity achieved through this process allows for a greater degree of certainty in simulation and prediction of *in situ* structural behavior.

The RAMPS system uses the bridge dynamic properties determined by the THMPR system for the model calibration process. FE model parameters are adjusted so that the frequencies and mode shapes of the model are more closely aligned to those from the experiment. This model-experiment correlation may be carried out using deterministic updating methods, probabilistic updating methods, or more novel multiple-model updating methods.

A third module provides the user with the ability to produce an AASHTO (American Association of State Highway Transportation Officials) live load rating. Live load rating factors are the most commonly used metric to quantify the safe load-carrying capacity of bridges by infrastructure owners and departments of transportation. RAMPS may simulate key responses of the bridge to truckloads and other demands using the calibrated FE model previously developed. These responses are then used to produce a refined AASHTO Load and Resistance Factor Rating (LRFR) of the structure, which may be then compared to its counterpart line-girder rating which is also produced through the software.

### B. Model Creation

Model creation in RAMPS is through the main model creation pane. The user may first choose to create a bridge model using NBI data or by entering the bridge geometry manually. At any point during the bridge creation process, the user may modify database-derived information such as the following.

### B1. NBI Database

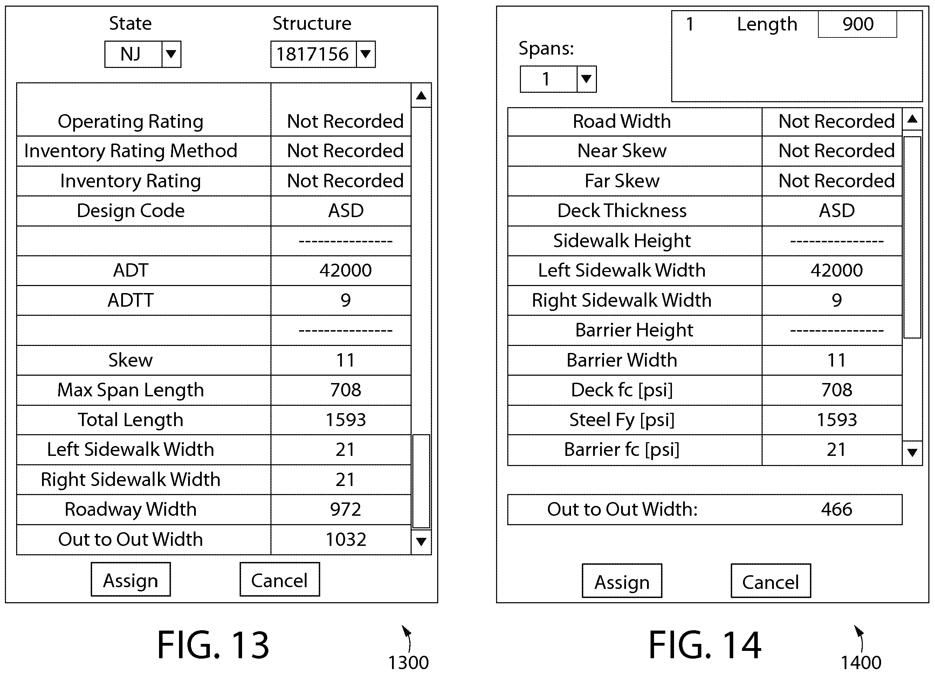

For NBI database-derived models, the user may choose a state, then a structure number. RAMPS then imports available information from the database as shown in the view 1300 shown in FIG. 13, in which certain parameters, as shown may be seen and used.

### B2. Bridge Geometry

The RAMPS software may model steel, prestressed concrete, and reinforced concrete multi-girder bridge types. The structure may be simply supported or a continuous span structure. The user may then enter or modify the following geometric features of the bridge as shown in the view 1400 shown in FIG. 14, in which certain parameters, as shown may be seen and used.
- Length
- Number of Spans
- Near and Far Skew Angles
- Deck Thickness
- Left and Right Sidewalk Widths
- Barrier Height
- Barrier Width
- Deck Strength
- Steel Strength
- Barrier Strength
- Sidewalk Strength

### B3. Diaphragms

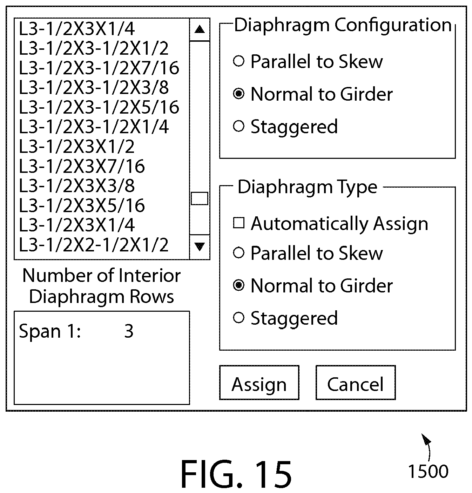

As shown in the view 1500 of FIG. 15, a user may choose the diaphragm type and configuration. Diaphragm configuration may be contiguous and parallel to the skew angle, contiguous and normal (90 degrees) to the girders, or staggered (non-contiguous) and normal to the girders. The diaphragm-type concerns whether the diaphragms are made up of cross bracing or chevron bracing (in which case the bracing elements are steel angle sections) or beams (in which case there is a single bracing element made up of a channel section or a full-depth concrete beam). The user may choose from an available database of angle sections or channel sections that are linked to a database of the current steel sections detailed by the American Institute of Steel Construction (AISC). If the user does not choose a section, RAMPS may choose a likely section itself.

### B4. Girders

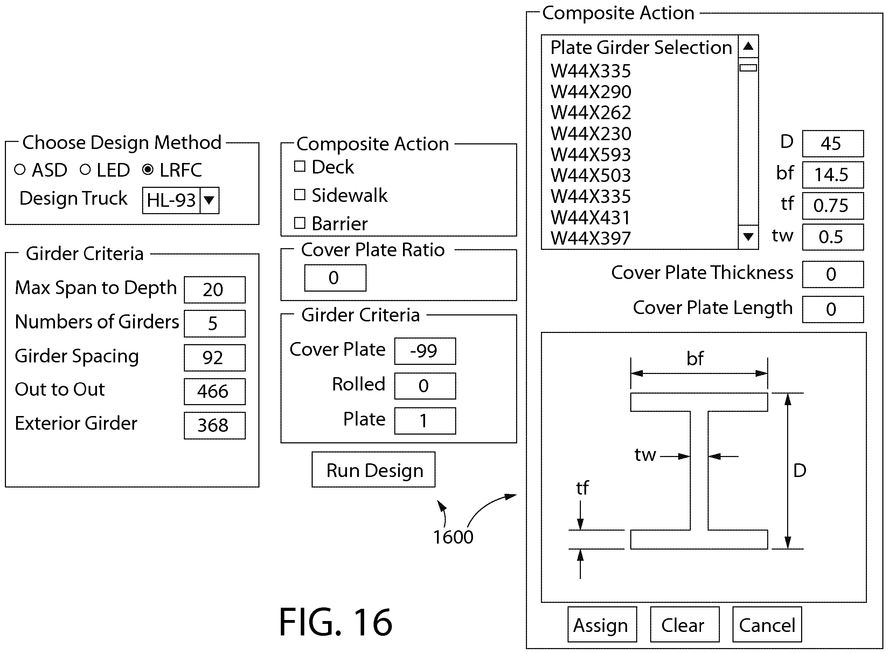

As shown in the view 1600 in FIG. 16, a user may choose the girder configuration for the structure. First, the user must specify the number of girders and girder spacing. After that, the user may be presented with two choices: 1) Allow RAMPS to design or choose an adequate girder for the specified number and spacing, or 2) Specify the girder dimensions and details manually. RAMPS may design a rolled section or plate girder section for steel bridges; in the case of rolled sections, the list of available "W-shapes" is pulled from the AISC database. The user may also manually choose a rolled "W-shape" from the same AISC database. In the case of reinforced concrete and prestressed concrete bridges the design consists of both the dimensions of the girder and the level of reinforcement and prestressing/eccentricity, respectively.

In the case of using RAMPS to design the girder, the user may specify the following for all bridge types:
- AASHTO Design Method
   - - Allowable Stress Design (ASD)
   - - Load and Resistance Factor Design (LRFD)
- Design Truck Configuration
   - -ASD
      --- HS-10
      --- HS-15
      - - - HS-20
      - - - HS-25
   - - LRFD
   - - HL-93
- Composite Girder/Deck
- Maximum Span Length to Girder Depth Ratio

In the case of continuous span bridges, the user may also specify:
- Negative Moment Region Girder Dimensions

### B5. Boundary Conditions

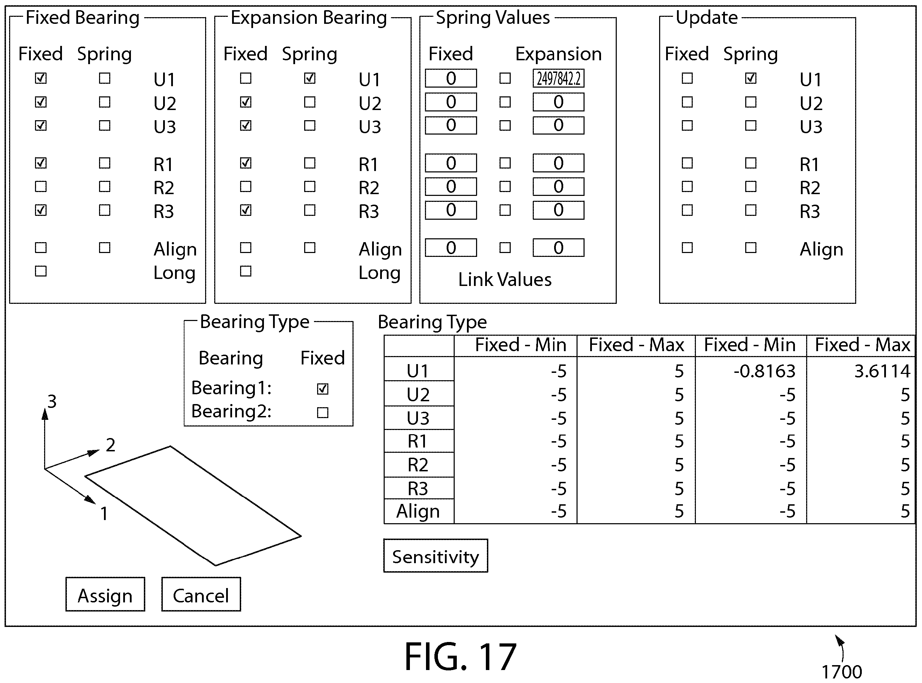

As shown in the view 1700 in FIG. 17, users may also choose the boundary conditions of the model. Two types of "bearings" may be defined - fixed and expansion - and then applied to each bearing number. Springs may be added to each bearing as well. The software provides for two special cases of boundary fixity: alignment bearings and longitudinal-only fixity bearings.

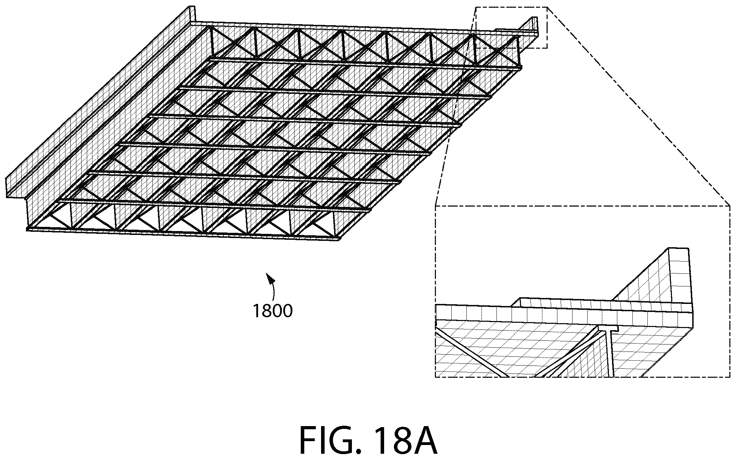

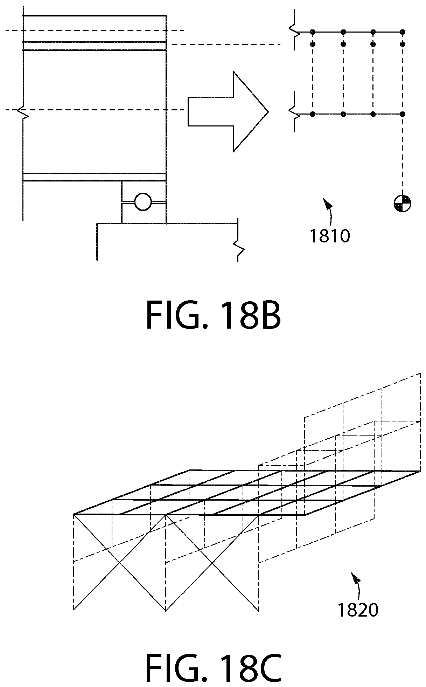

Then RAMPS creates a 3D element-level FE model of the structure by communicating with Strand7. Girders, diaphragms, and barriers may be constructed out of beam elements, while the deck and sidewalks are constructed out of shell elements. Link elements are used to enforced continuity and maintain geometry consistency. The link elements may be adjusted to modify the degree of continuity or composite action for girders and the deck. An example of an element-level FE model 1800 is shown in FIG. 18A, and FIGS 18B and 18C show schematics 1810, 1820 of the model construction.

### B6. Model Correlation

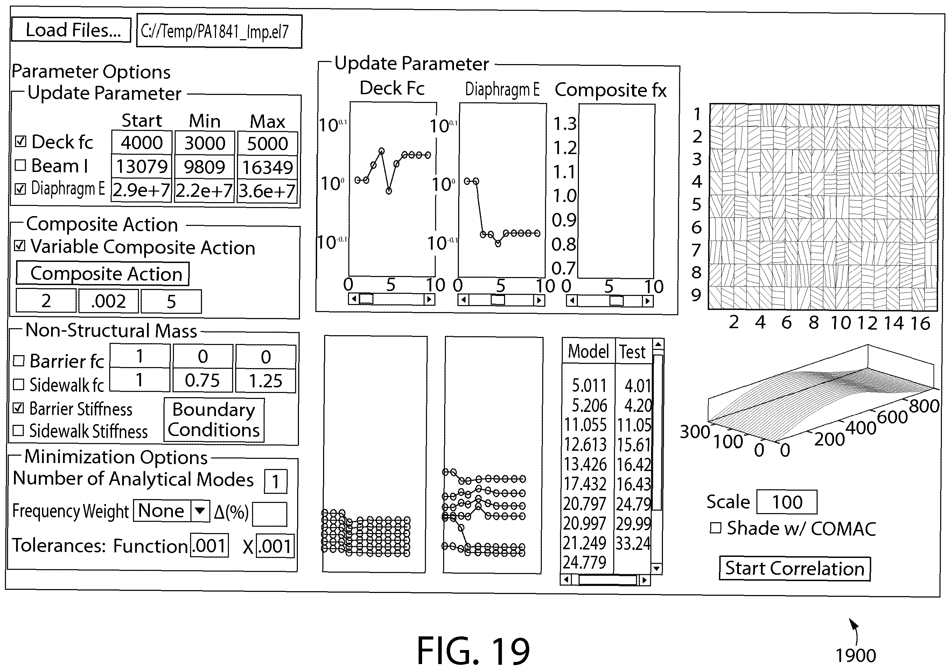

Model correlation may be achieved by deterministic, probabilistic, or multiple-model updating. In deterministic updating, each parameter may have a single value, and the purpose this updating is to solve for this value using an iterative process. Deterministic updating may depend upon the starting value for each parameter. Deterministic updating may be accomplished using a gradient-based method that samples over a response surface towards the goal of minimizing some objective function. In the case of RAMPS, the nonlinear gradient-based minimization with constraints algorithm (*Isqnonlin* in MATLAB), may be used to adjust parameters. For each calibration run (view 1900 shown in FIG. 19), the frequencies and mode shapes (the deformed shapes of the structure while vibrating at certain frequencies) of the FE model are compared to those from the experiment and the differences are minimized in an iterative process.

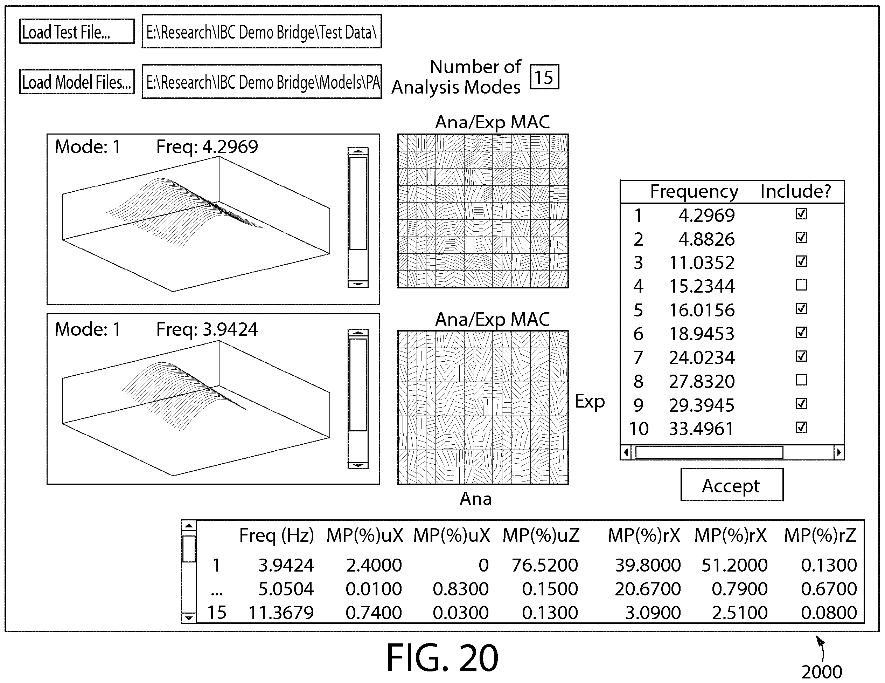

Before model calibration, experimental and analytical (FE model) frequency mode shapes may be compared (view 2000 in FIG. 20) and experimental frequencies chosen for the calibration process. Frequencies, mode shapes, and mass participation factors imported from Strand7.

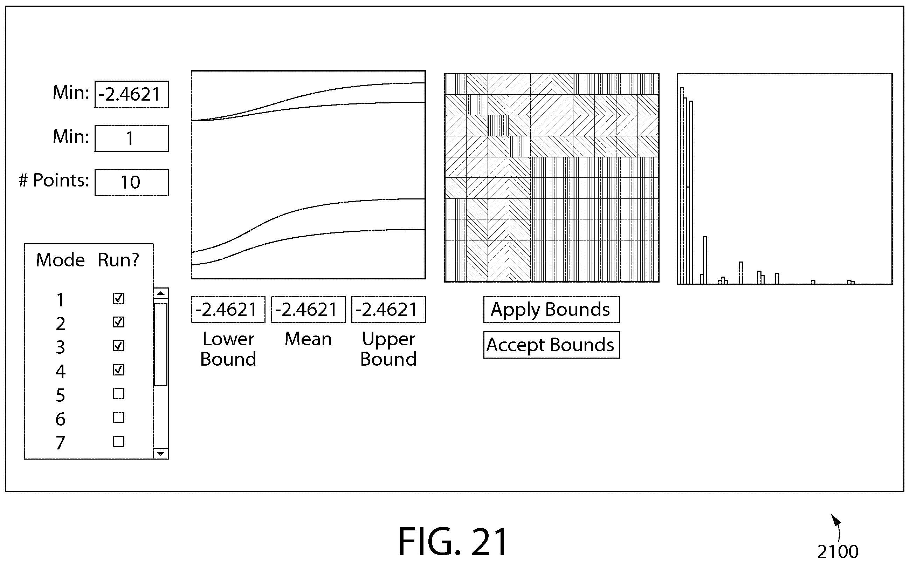

Sensitivity studies 2100 in FIG. 21 may be performed on any boundary condition spring as well as the link elements used to simulated composite action.

### B7. Load Rating

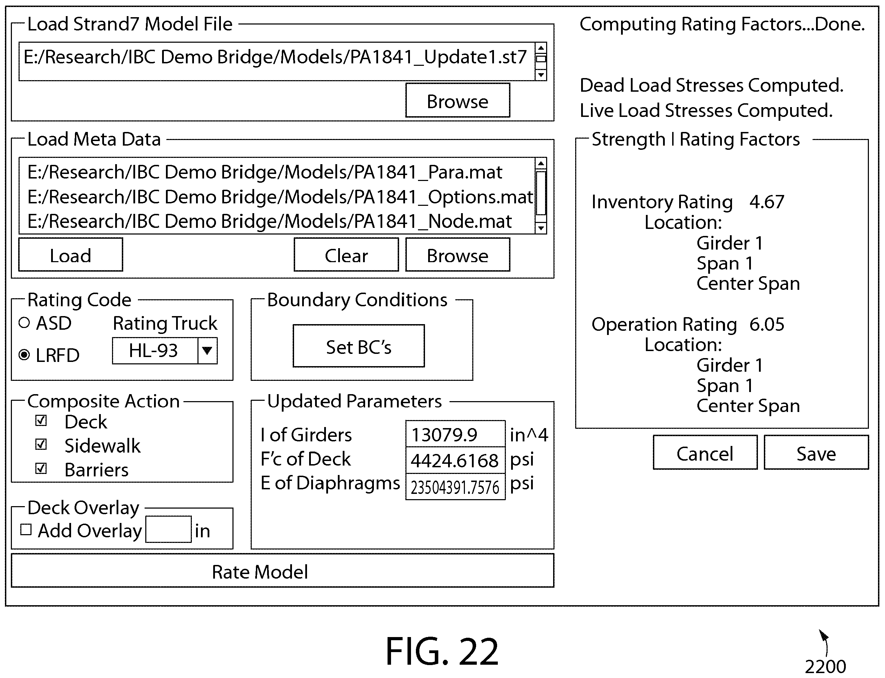

As shown in the view 2200 shown in FIG. 22, live load rating may be performed by simulating truck wheel and lane loads on the FE model. The force, moment, and stress responses from the model are imported from Strand7 and used to calculate either AASHTO Allowable Stress Ratings (ASR) or Load and Resistance Factor Ratings (LRFR) for the bridge. (These ratings systems may be the source of other ratings mentioned herein.)

Composite action may be modified for the deck, barriers, and sidewalks. Additionally, an overlay may be added to the structure to simulated extra load from asphalt and concrete cover. RAMPS produces ratings for the AASHTO Strength I and Service II limit states found in ASR and LRFR.

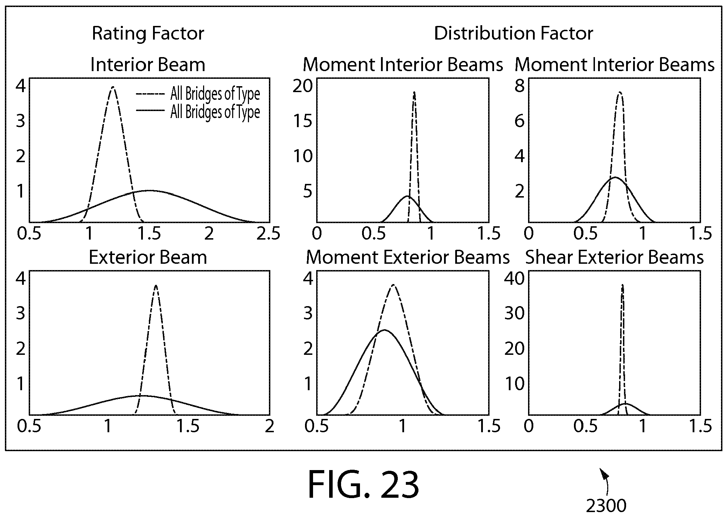

RAMPS may also include:
1) Pre-stressed concrete and reinforced concrete beam design, model calibration, and load rating.
2) Distribution Factors such as the addition of FE model-derived distribution factors to load rating.
3) Neutral Axis Location such as the addition of FE model-derived composite action factor and composite section neutral axis locations.
4) Probabilistic and Multiple Model Calibration such as the use of a Markov Chain Monte Carlo model updating process that produces probabilistic parameter distribution and probability distributions for load rating factors, as shown in the view in FIG. 23.
5) Comparison to Larger Bridge Population such as a comparison of rating factor and distribution factors for single bridge to other bridges in target population.

### III. MODAL IDENTIFICATION AND TEST METHODOLOGY

Upon successful data acquisition at an impact location, the testing software first performs automated data quality checks to vet the data records used for further processing before the trailer is moved to another location. This includes checking for excessive erroneous noise, dropped channels, overloading of the load cells, and proper time synchronization of the independent data acquisitions. Next, a series of automated filtering and windowing algorithms are applied following the current best practice approaches. The Frequency Response Function (FRF) may be then autonomously developed for each degree of freedom and coherence and phase angle are computed and displayed for data quality and linearity checks manually or automatically. Semi-automated modal identification may be performed for each impact location via the Complex Mode Indicator Function (CMIF) or similar that extracts approximate pole locations and corresponding mode shapes for each local test location.

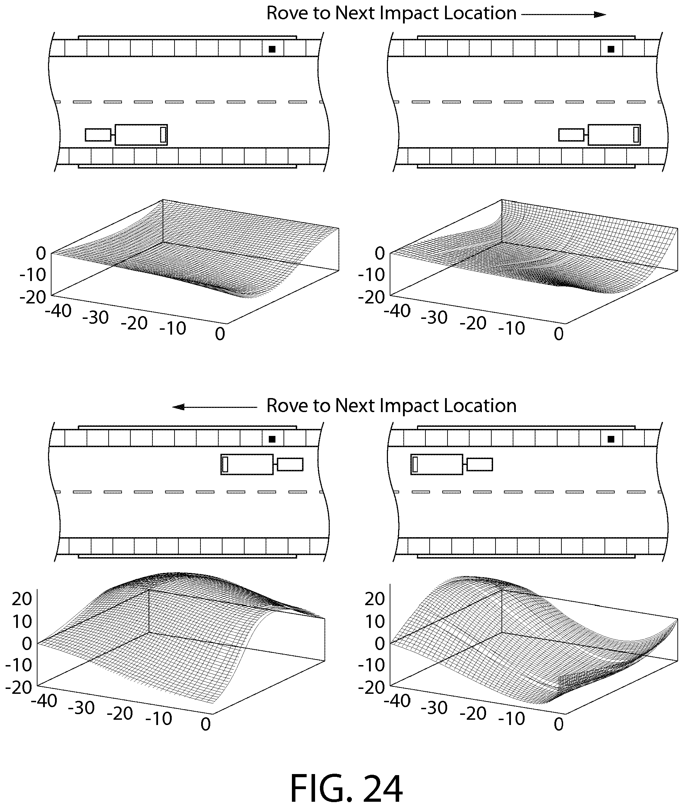

A 'master' test location is then selected for each mode shape, which corresponds to the impact location closest to the highest modal amplitude for each individual mode shape. This enforces high signal to noise ratios and preserves data quality during post processing. The selected master test location for each mode shape may be passed to an Enhanced Frequency Response Function (eFRF) module which uses each respective mode shape and approximate pole location to perform a single degree of freedom least squares fit on the experimentally derived FRF data. This provides the ability to estimate the damped natural frequencies and modal scaling of the structure (in addition to just mode shapes and frequencies). Finally, the modal properties of each master local impact location are 'stitched' together by using the linear relationship between spatially common reference sensors to form a comprehensive set of global modal parameters shown in view 2400 in FIG. 24.

### A. Experiment/Model Integration

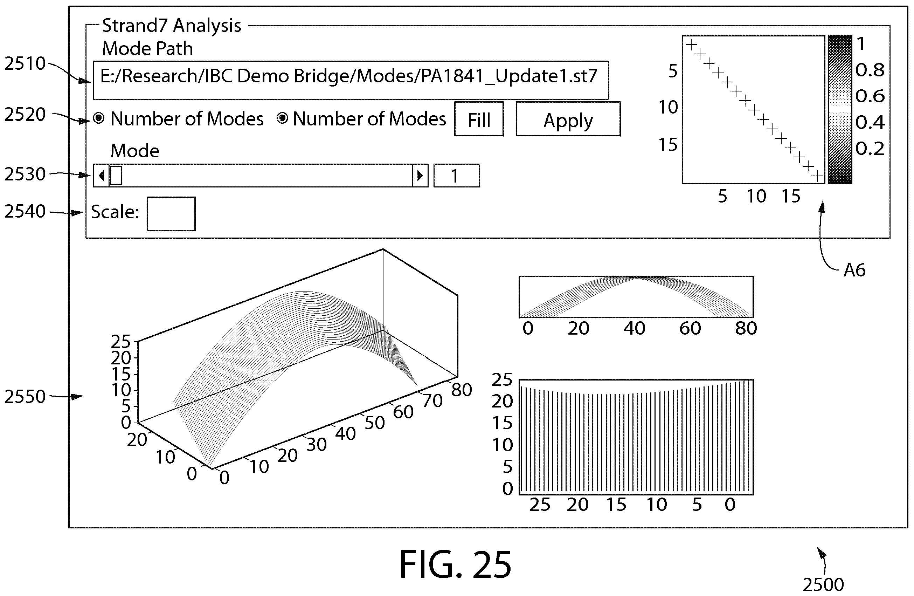

Prior to conducting a test, a series of Matlab/Strand7 API functions are run to extract preliminary information from the FE model. Seen in the view 2500 in FIG. 25, the user selects the file name and path of the Strand 7 model 2510 and selects either the frequency bandwidth or the maximum number of natural frequencies to estimate 2520. Once this information is entered, a natural frequency analysis may be performed on the model file and displayed 2550. The user may then scroll through the solved modes 2530 that are displayed in scalable 2540 3D, plan and elevation views 2550. A Modal Assurance Criterion (MAC) analysis may be performed on the *a priori* modal vectors and displayed for the user as well 2560. Additionally, the deck nodal coordinates and unique Strand 7 nodal ID are extracted from the model and saved within the VMA workspace to be used throughout the test. These global model nodes are then used as a master set for all spatial parameters input throughout the testing. THMPR impact locations, local sensor locations, and stationary reference sensor locations may then be assigned to the corresponding FE model nodes to ensure seamless interaction between the experiment and modeling.

### B. Data Acquisition and Controls

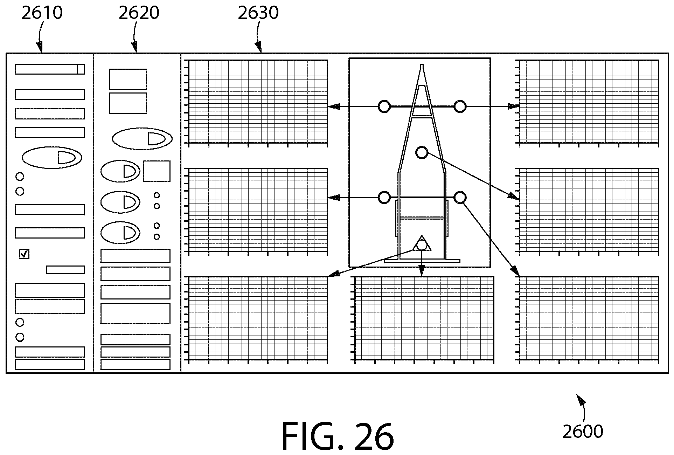

The THMPR system data acquisition and hydraulic and pneumatic control is performed through National Instruments LabVIEW FPGA environment, shown in the view 2600 FIG. 26. The user selects the sampling frequency, block size, and file name 2610 for each data record at each impact location. The user is then able to stream the data to disk locally in binary format (which is later converted to standard ASCII text format) while operating the trailer. Semi-automated control 2620 consists of the ability to raise and lower both the local sensor array and the impact carriage. Additionally, the mass is raised a variable 12"-18", dropped and autonomously caught by a rebound control system. The mass may be then held its rebound apex for 10 seconds to allow the free vibration of the bridge to damp out. The local six accelerometers, three load cells, and global stationary reference accelerometers are continuously read and displayed 2630 for complete situational awareness for the user.

### C. Data Import

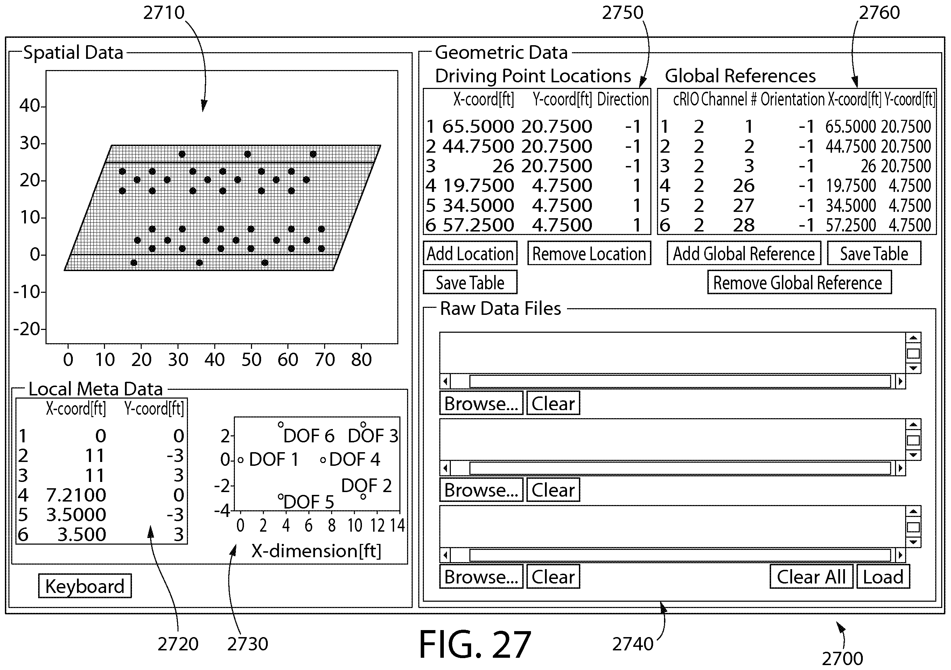

The raw data collected at each impact location may then import into VMA shown in view 2700 in FIG. 27. The nodal coordinates of the test bridge and all impact locations may be continuously displayed 2710 for the user. The coordinates of the local sensor array of the trailer are displayed 2720 and graphed 2730 for the user. Although these coordinates are fixed, this table may be editable in case adjustments must be made in the field. This table of local coordinates may then be used to assign the orientation and local coordinates of the THMPR system to the global coordinates of the test bridge for each impact location. This may be entered by the user 2750 in which the driving point measurement on the trailer is the point of reference. Information regarding the stationary global references is input once by the user 2760 and contains a user friendly format for labeling and saving information for each sensor, including its global x and y coordinates, its unique degree-of-freedom number, and its orientation and channel information, which permits seamless data import. Data files may then be selected by the user 2740 and loaded into the VMA workspace using tables 2750 and 2760 to pair temporal data with spatial data.

### D. Semi-Automated Pre-processing

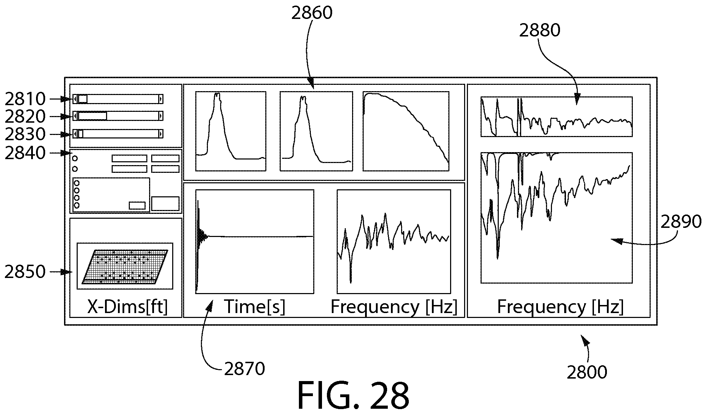

Upon successful data acquisition at an impact location, the software may first perform automated data quality checks to vet the data records used for further processing before the trailer is moved to another location. This may include checking for excessive erroneous noise, dropped channels, overloading of the load cells, and proper time synchronization of the independent data acquisitions. As shown in the view 2800 in FIG. 28, the user may then be able to navigate the data for each impact location 2810, average number 2820, and sensor number 2830. The time and frequency force information 2860, response time and frequency information 2870 and spatial information 2850 for each selection are also displayed for the user. Next, a series of automated filtering and windowing algorithms 2840 may be applied following the current best practice approaches. The filtering typically includes the use of a low-pass Butterworth filter as these filters have low ripple effects within the passband. Automated windowing may then be performed including a rectangular window on the force signal (using 1/16th cosine taper at the ends of the signal while keeping unity during impact) and an exponential window on the response signals to prevent leakage errors by ensuring the free-decay vibration signal approaches zero at the end of each record. The Frequency Response Function, coherence, and phase 2880, 2890 may then be autonomously developed and displayed for each degree of freedom (DOF) using the H1 method (this is based on the assumption that the majority of noise introduced into the system occurs at the response channels).

### E. Semi-Automated Modal Identification

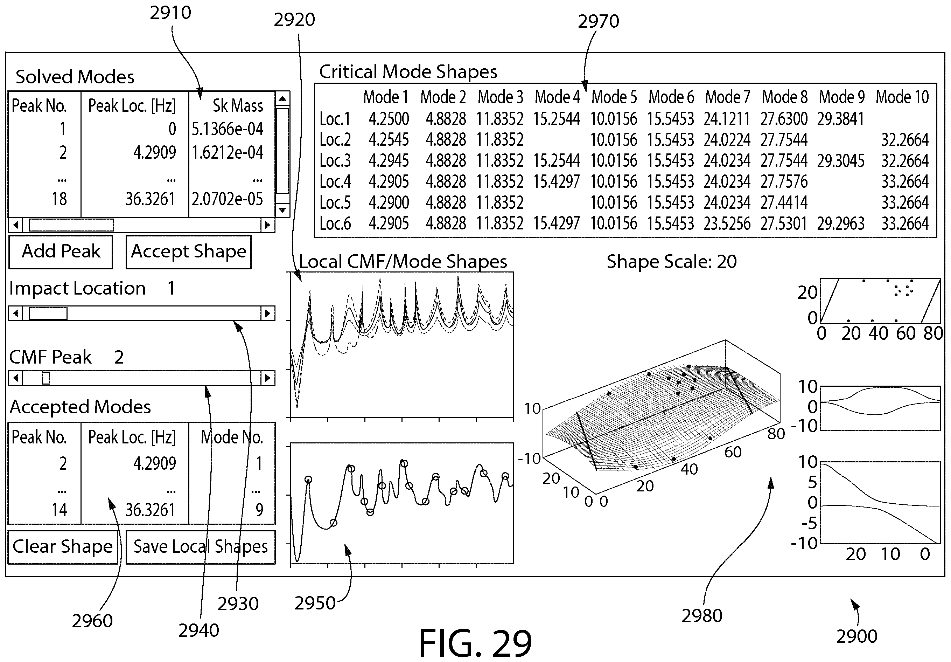

Semi-automated modal identification is performed for each impact location via the Complex Mode Indicator Function (CMIF) or other methods to extract approximate pole location and modeshapes. CMIF is a spatial domain method typically used for multi reference impact testing (MRIT), or multiple-input-multiple-output (MIMO) testing. It is based upon the Expansion Theorem in that it assumes that, at every frequency, the long dimension of the FRF matrix is made up of a summation of modal vectors. The Singular Value Decomposition (SVD) is then used to estimate the modal vectors (modeshapes) at each frequency line for each available impact location. As can be seen in the view 2900 in FIG. 29, the resulting singular values are a measure of dominance of the corresponding modal vector/shape at each frequency line and displayed for each impact location 2920 as well as the selected impact location 2950 with identified candidate peaks. An automated peak-picking algorithm identifies and indexes candidate pole locations and corresponding mode shapes. The candidate peak locations are displayed for the user 2910 who is able to scroll through each impact location 2930 and each candidate peak 2940 to display the peak's modeshapes in 3D, plan, and elevations 2980. The user then selects a final set of local pole locations 2960 and assigns global modal rank 2970.

### F. Modal Identification- Enhanced Frequency Response Function

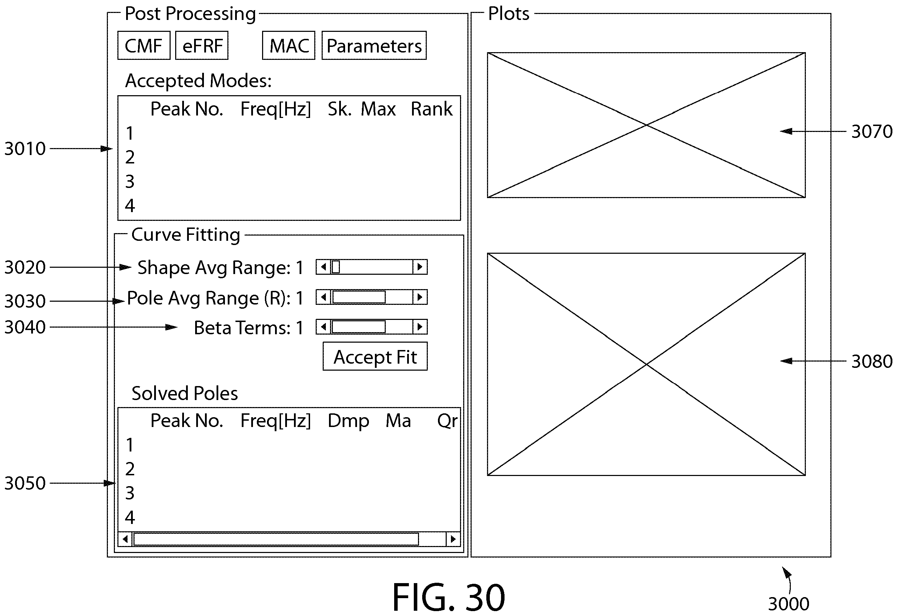

The approximate pole locations are then passed to an Enhanced Frequency Response Function (eFRF) module. The eFRF is a virtual measurement that uses a single degree of freedom model to identify temporal information (poles and scaling) from the spatial information (modeshapes/modal vectors) for each mode identified in the CMIF. The eFRF is formed by pre and post multiplying the FRF by left and right singular vectors respectively for each mode. This is commonly referred to as performing a 'modal filter' and enhances a particular mode of vibration. A second order Unified Matrix Polynomial Approach is then used to perform a SDOF least squares fit for each mode and accompanying eFRF. This provides a solution to the damped natural frequencies and modal mass of each synthesized SDOF. With reference to the view 3000 in FIG. 30, each candidate pole location may be displayed 3010 where the user can choose the number of shapes to average 3020, the pole average range 3030, and the number of beta terms 3040. The combination of these parameters may produce a synthesized eFRF for each mode that is overlaid with the experimentally measured eFRF in real time 3070. Throughout the analysis, the full set (for each mode) of eFRF's may be displayed to the user for reference 3060. The final set of extracted modal parameters for the master SIMO location may then be displayed to the user for final confirmation 3050.

### G. Global Modal Parameters-Substructure Integration

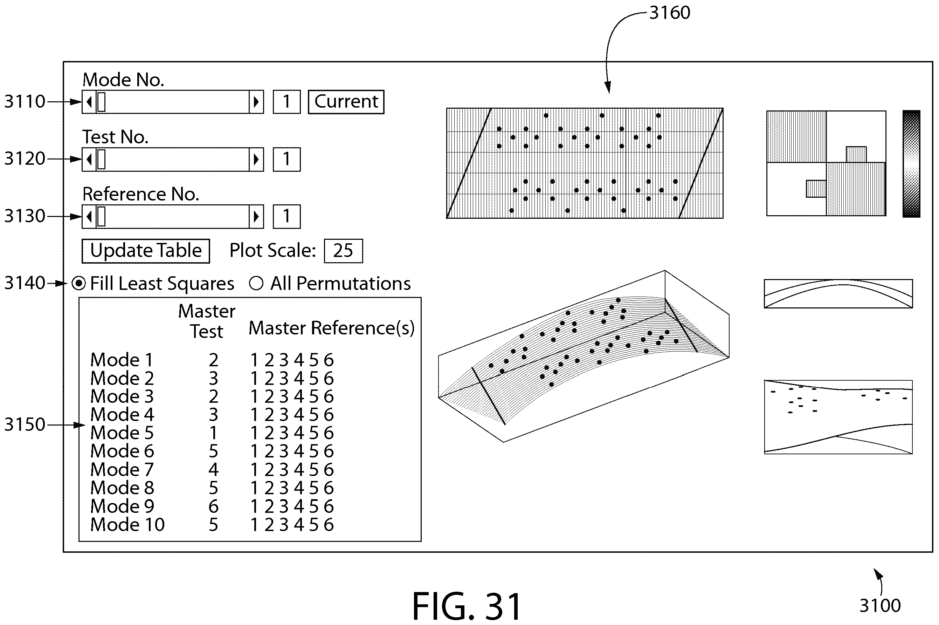

Finally, the modal properties from each impact location are 'stitched' together by using the linear relationship between the spatially common reference sensors to form a comprehensive set of global modal parameters. Referring to the view 3100 in FIG. 31, the user may be able to scroll each identified global mode 3110, each impact location 3120, and each stationary reference 3130, to select a set of 'master' test parameters. These final parameters are then displayed in an editable table 3150 for the user. Additionally, the final set of global modal parameters may be viewed in 3D, plan and elevations 3160 to ensure appropriate selection of all parameters.

### IV. CASE STUDY

Consecutive impact tests using two impact testing methods were performed on the bridge to validate the THMPR system components and SIMO test strategy. A model 086D50 instrumented sledge with a force range of 0-5kips and weight of 12.11bs was selected to represent the state-of-practice in MRIT, and was used to performed multiple-input-multiple-output (MIMO) impact tests at five locations on the bridge deck. The THMPR system was then used to perform multiple local SIMO impact tests at the same locations with seven stationary references located on either sidewalk available to integrate local modal parameters to global parameters. The modal parameters (frequencies, damping, mode shapes) extracted from each independent test may then be compared to establish the relative accuracy and viability of the THMPR system in rapidly and reliably extracting modal parameters of a highway bridge.

### A. PC Bridge

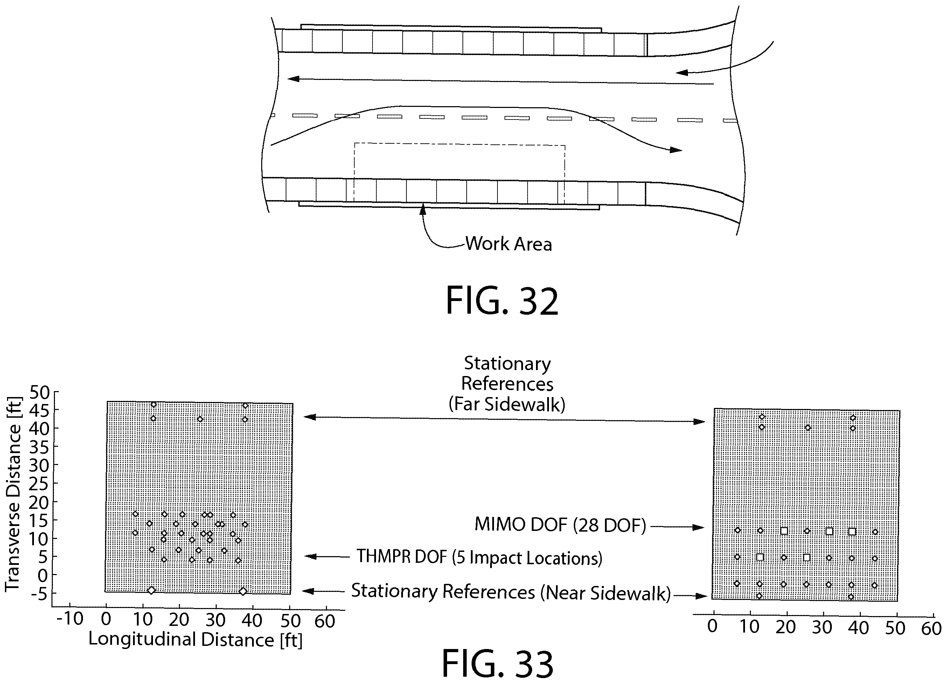

The PC Bridge (PCB) is a three span, simply supported steel stringer structure carrying two lanes of traffic in each direction over a creek and having a rough top view as that shown in FIG. 32. Each span measures 50' in length, 50' in width with a reinforced concrete deck on simply supported rolled steel I-beams with partial-length welded bottom flange cover plates. Traffic control was established at 9AM and provided a partial closure of the bridge leaving topside access limited to the southern two lanes and both sidewalks until test conclusion at 3PM.

### B. Instrumentation Plan

Twenty-eight model PCB393A-03 accelerometers were fixed to the bridge deck in a dense grid as modeled in FIG. 33, cabled to an independent GPS synchronized data acquisition, and continuously recorded throughout testing. Seven of the twenty-eight accelerometers were placed on the sidewalk (out of traffic lanes) and chosen to be used as global references for the local SIMO test integration. A total of five impact locations were selected and shared between test methods. The locations were selected to impact at areas of high modal amplitude for fundamental modes in order to preserve data quality by exciting modes with high mass participation. The first set of impact locations was conducted at ¼ span and ½ span along the near lane and the second set at ¾ span, 5/8 span and 3/8 span along the far lane. MIMO testing with the instrumented sledge began at 10AM and concluded at 12PM and directly after, the THMPR testing began testing and continued until 2PM. Note the testing time of the THMPR system is slightly exaggerated as extra care was taken to carefully position the trailer at each impact location (to achieve a better comparison between test approaches) as well as not to disrupt the sensor grid of MIMO sensors in the roadway.

### C. Data Quality

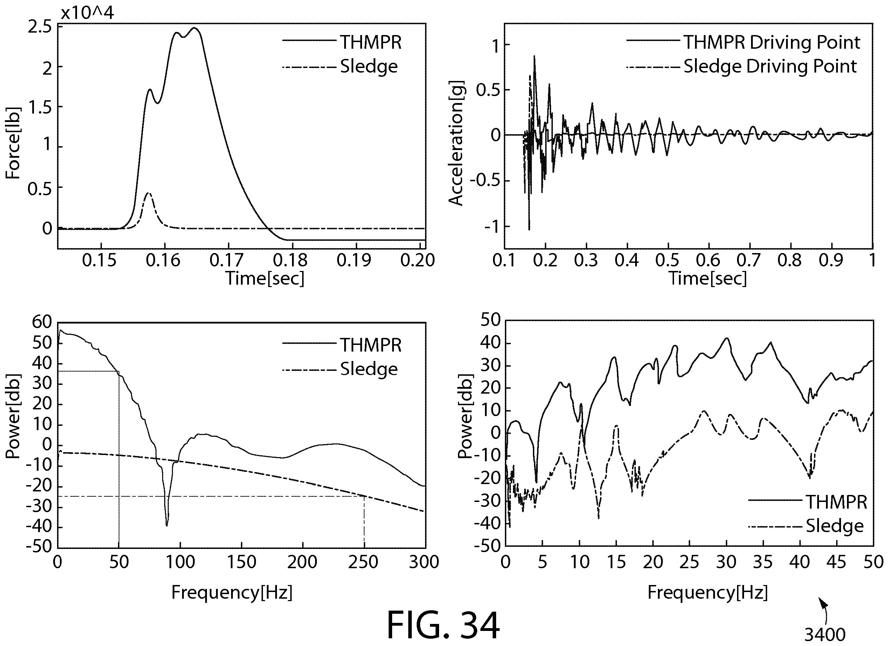

A total of five impacts were performed at each impact location to use for averaging later in FRF development. Data was recorded at a sampling rate of 3200Hz in order to define the shape of the impulse signal, and a record length of 10 seconds was used to capture the full free-decay of the structure post-impact. Typical input force levels of the instrumented sledge were observed up to 5,000lbs with a usable frequency band of 0-250Hz, and typical input force levels of the THMPR impact device were observed above 25,000lbs with a usable frequency band of 0-50Hz (results 3400 shown in FIG. 34). Driving point acceleration levels of the instrumented sledge test were observed up to +/-.5g, however, the length of the free-decay was relatively short and high acceleration levels did not typically last long. This is due to the instrumented sledge's low mass and relatively stiff impact tip. The frequency content input to the structure suffered from being too broad banded and was not able to fully activate the mass of the structure and drive the lower frequency, fundamental modes. The THMPR system provided driving point acceleration levels at +/-2g's. Due to the large force levels and focused input frequency band, the THMPR system activated the mass of the bridge better than the instrumented sledge and produced data records with longer free decay response time histories. This resulted in a frequency resolution of .098Hz and, as seen in the figure, aided in the THMPR system's ability to better characterize the closely spaced first and second modes. The frequency content of the structural response for both test methods shows clearly defined, smooth peaks of resonance, which indicates linearity as well as good excitation, and characterization of all fundamental modes.

### D. Partial Modal Parameter Estimation

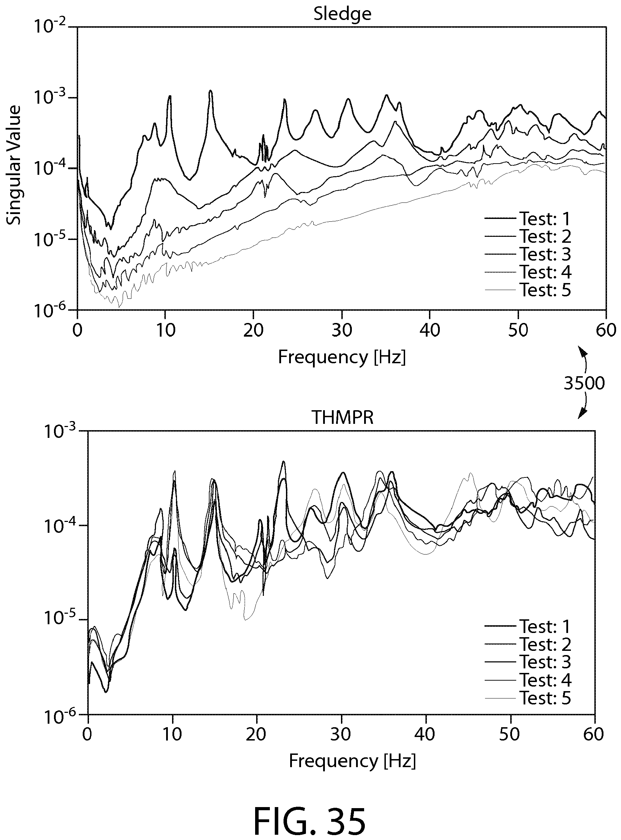

Modal parameter estimation was performed immediately following each impact test for each test method to provide immediate feedback of the data quality, structural response of the bridge, and operating condition of the test equipment to the on-site engineers. The semi-automated modal identification software of the THMPR system was used to perform signal processing on site during the local SIMO impact tests, and generalized, core signal processing functions within the THMPR system's processing toolbox were used to perform custom modal processing during the instrumented sledge MIMO impact tests. After developing the FRFs, the CMIF was calculated for each test method (results 3500 shown in FIG. 35). Each peak of the CMIF represents a location of resonance of the structure and the amplitude is directly related to the dominance of the corresponding shape at that location. Both test methods show well-defined areas of resonance and good characterization of global modes. The THMPR system's local SIMO modal analyses may be independent of each other and may only leverage one impact location as a reference in the singular value decomposition. This creates an inconvenient necessity to super impose each independent test's singular values in order to compare areas of resonance and ultimately select global modal parameters. In contrast, multi-reference MIMO analysis has the benefit of using all five impact locations to form a set of global modal vectors and provide solutions to five mode shapes (and corresponding singular values) at each frequency line.

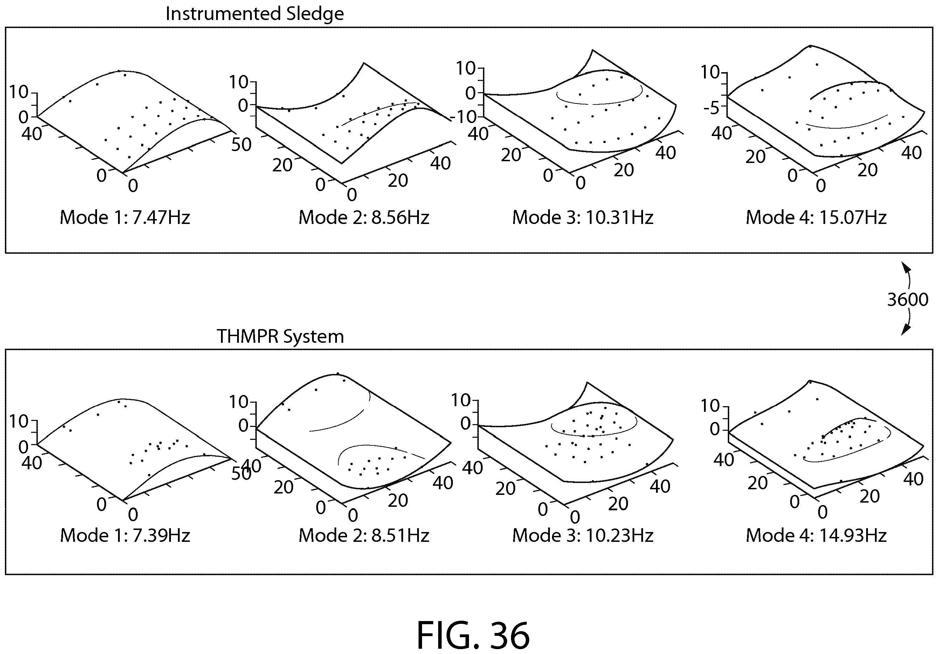

A partial set of global modal parameters were extracted from each test and presented in FIG. 36. Master SIMO locations were chosen for each mode of the THMPR analysis based on the relative amplitude of the test location's singular value. The SIMO impact location with the largest amplitude for a specific mode contains the highest signal to noise ratio and is then used as the master set of parameters for integrating the multiple SIMO tests into a global set. A combination of the stationary references for each 'master' local mode shape was chosen on an individual mode basis to avoid using reference sensors in locations of low modal amplitude for a particular mode. Additionally, impact locations close to a nodal point for a particular mode were discarded and not used for incorporation within the global modal parameter set. The partial set of global modal parameters extracted via the THMPR system and instrumented sledge consist of four modes within the frequency band of 0-15Hz (Table 1) and show very good agreement with a maximum difference in pole location of 1%.

**Table 1: Partial Modal Parameter Comparison**

| Mode | Sledge MIMO [Hz] | THMPR SIMO [Hz] | % Difference |
|---|---|---|---|
| 1 | 7.47 | 7.39 | -1.07% |
| 2 | 8.56 | 8.51 | -0.58% |
| 3 | 10.31 | 10.23 | -0.78% |
| 4 | 15.07 | 14.93 | -0.93% |

## Claims

1. A system for measuring structural integrity comprising:
a self-contained rapid modal testing trailer (101) that delivers a mass to a structure (90) being tested and records data resulting from the mass in a data acquisition program, the testing trailer (101) comprising:
an impact device (1010) that delivers the mass and comprises a strike surface (127);
a sensor assembly that extends from the testing trailer (101) to engage the structure (90); and
the impact device (120) comprises the mass (122) that impacts the strike surface(127) to deliver the impact load;
wherein when the mass strikes the strike-surface (127), a rebound control system is activated to catch the mass from striking the strike surface a second time thereby preventing rebound of the mass;
the system **characterized in that**:
the testing trailer (101) comprises a second impact device (1020) and
the sensor assembly comprises local sensors (1110) spaced along outer sensor array arms (1120) and extended from the trailer (101) by an adjustable inner sensor arm (1030), wherein the inner sensor arms may be able to rotate as well as extend and retract longitudinally and transversely.

2. The system of claim 1, wherein the rebound control system comprises a rebound control actuator (140) and a rebound control rod (126a), and upon a hall sensor (129) detecting the mass (122) striking the strike surface (127), the hall sensor (129) communicates this contact to a controller (130) that activates the rebound control actuator (140), which extends the rebound control rod (126a) to catch the mass (122).

3. The system of claim 2, wherein the rebound control rod (126a) engages an impact carriage (124) that is engaged with the mass (122).

4. The system of claim (2), wherein the controller (130) activates a 3-way valve that releases air pressure that extends the rebound control arm.

5. The system of claim 1, wherein the impact mass (122) is adjustable.

6. The system of claim 1, wherein the sensor assembly (110) engages the structure (90) to be measured via a stabilizer foot (142).

7. The system of claim 6, wherein the sensor assembly (110) extends from the trailer via activation of an actuator (141).

8. The system of claim 1, wherein the impact device is controlled using a controller (130).

9. The system of claim 1, wherein the sensor assembly (110) is controlled using a controller 130.

10. The system of claim 1, wherein the sensor assembly (110) comprises a floating spring loaded accelerometer (144).

11. The system of claim 1, further comprising data processing software and an automated data quality check to check recorded data records.

12. The system of claim 11, wherein the checking comprises checking for excessive erroneous noise, dropped channels, overloading of the load cells, and/or proper time synchronization of the independent data acquisitions

13. The system of claim 1, wherein the sensor assembly (110) may be extended in multiple directions parallel to the structure (90) before engaging the structure (90).

14. The system of claim 1, further comprising reference sensors that are synchronized with the data acquisition program and located on the structure at a point of high modal amplitude relative to other locations on the structure.

15. The system of claim 1, wherein the mass (122) falls along linear guide rails (121), and upon detection of a rebound of the mass (122) after impact on a strike surface(127), the impact device engages brakes that engage the linear guide rails (121) and stop the mass (122) from rebounding into the strike surface (127).

## Patentansprüche

1. System zur Messung der strukturellen Integrität, das Folgendes umfasst:
einen in sich abgeschlossenen Anhänger (101) für schnelle Modalprüfungen, der eine Masse an eine zu prüfende Struktur (90) liefert und Daten, die sich aus der Masse ergeben, in einem Datenerfassungsprogramm aufzeichnet, wobei der Prüfanhänger (101) Folgendes umfasst:
eine Schlagvorrichtung (1010), die die Masse abgibt und eine Schlagfläche (127) aufweist;
eine Sensoranordnung, die sich vom Testanhänger (101) aus erstreckt, um die Struktur (90) zu erfassen; und
die Schlagvorrichtung (120), welche die Masse (122) umfasst, die auf die Schlagfläche (127) auftrifft, um die Schlaglast zu liefern;
wobei, wenn die Masse auf die Schlagfläche (127) auftrifft, ein Rückprall-Steuersystem aktiviert wird, um die Masse daran zu hindern, ein zweites Mal auf die Schlagfläche aufzutreffen, wodurch ein Rückprall der Masse verhindert wird;
das System ist **dadurch gekennzeichnet:**
**dass** der Prüfanhänger (101) eine zweite Aufprallvorrichtung (1020) umfasst und die Sensoranordnung lokale Sensoren (1110) umfasst, die entlang äußerer Sensoranordnungsarme (1 120) in Abständen angeordnet sind und von dem Anhänger (101) durch einen einstellbaren inneren Sensorarm (1030) verlängert werden, wobei die inneren Sensorarme in der Lage sein können, sich zu drehen in Längs-und Querrrichtung auszufahren und sich einzuziehen.

2. System nach Anspruch 1 das Rückprall-Steuersystem einen Rückprall-Steuerungsaktuator (140) und eine Rückprall-Steuerungsstange (126a) umfasst, und wenn ein Hall-Sensor (129) feststellt, dass die Masse (122) auf die Anschlagfläche (127) aufschlägt, übermittelt der Hall-Sensor (129) diesen Kontakt an eine Steuerung (130), die den Rückprall-Steuerungsaktuator (140) aktiviert, der die Rückprall-Steuerungsstange (126a) ausfährt, um die Masse (122) einzufangen.

3. System nach Anspruch 2, wobei die Rückprall-Steuerstange (126a) in einen Schlagschlitten (124) eingreift, der mit der Masse (122) in Eingriff steht.

4. System nach Anspruch (2), wobei die Steuerung (130) ein 3-Wege-Ventil aktiviert, das Luftdruck abgibt, der den Rückprall-Steuerarm ausfährt.

5. System nach Anspruch 1, wobei die Aufprallmasse (122) einstellbar ist.

6. System nach Anspruch 1, wobei die Sensoranordnung (110) über einen Stabilisatorfuß (142) an der zu messenden Struktur (90) eingreift.

7. System nach Anspruch 6, wobei die Sensoranordnung (110) durch Aktivierung eines Aktuators (141) aus dem Anhänger ausfährt.

8. System nach Anspruch 1, wobei die Aufprallvorrichtung unter Verwendung eines Controllers (130) gesteuert wird.

9. System nach Anspruch 1, wobei die Sensoranordnung (110) unter Verwendung eines Controllers 130 gesteuert wird.

10. System nach Anspruch 1, wobei die Sensoranordnung (110) einen schwimmenden federbelasteten Beschleunigungsmesser (144) umfasst.

11. System nach Anspruch 1, das ferner eine Datenverarbeitungssoftware und eine automatische Datenqualitätsprüfung zur Überprüfung der aufgezeichneten Datensätze umfasst.

12. System nach Anspruch 11, wobei die Überprüfung das Überprüfen auf übermäßiges fehlerhaftes Rauschen, ausgelassene Kanäle, Überlastung der Lastzellen und/oder korrekte Zeitsynchronisation der unabhängige Datenerfassungen umfasst

13. System nach Anspruch 1, wobei die Sensoranordnung (110) in mehrere Richtungen parallel zu der Struktur (90) ausgefahren werden kann, bevor sie mit der Struktur (90) in Eingriff kommt.

14. System nach Anspruch 1 umfasst ferner Referenzsensoren, die mit dem Datenerfassungsprogramm synchronisiert sind und sich an der Struktur an einem 'Punkt mit hoher modaler Amplitude relativ zu anderen Stellen an der Struktur befinden.

15. System nach Anspruch 1, wobei die Masse (122) entlang linearer Führungsschienen (121) fällt und die Aufprallvorrichtung bei Erkennung eines Rückpralls der Masse (122) nach dem Aufprall auf eine Aufprallfläche (127) Bremsen betätigt, die in die linearen Führungsschienen (121) eingreifen und die Masse (122) am Rückprall auf die Aufprallfläche (127) hindern.

## Revendications

1. Système permettant de mesurer l'intégrité structurale, comprenant :
une remorque de test modal rapide autonome (101) qui délivre une masse à une structure (90) testée et enregistre les données résultant de la masse dans un programme d'acquisition de données, la remorque de test (101) comprenant :
un dispositif à impact (1010) qui fournit la masse et comprend une surface de frappe (127) ;
un ensemble capteur qui s'étend de la remorque de test (101) pour venir en prise avec la structure (90) ; et
le dispositif à impact (120) comprend la masse (122) qui impacte la surface de frappe (127) pour délivrer la charge d'impact ;
dans lequel, lorsque la masse heurte la surface de frappe (127), un système de commande de rebond est activé pour empêcher la masse de heurter la surface de frappe une deuxième fois, empêchant ainsi le rebond de la masse ;
le système est **caractérisé en ce que** :
la remorque de test (101) comprend un second dispositif à impact (1020) et l'ensemble de capteurs comprend des capteurs locaux (1110) espacés le long des bras du réseau de capteurs externes (1 120) et étendus depuis la remorque (101) par un bras de capteur interne réglable (1030), dans lequel les bras de capteur internes peuvent être capables de tourner ainsi que de s'étendre et se rétracter de façon longitudinale et transversale.

2. Système selon la revendication 1, dans lequel le système de commande de rebond comprend un actionneur de commande de rebond (140) et une tige de commande de rebond (126a), et sur un capteur à effet Hall (129) détectant la masse (122) heurtant la surface de frappe (127), le capteur à effet Hall (129) communique ce contact à un contrôleur (130) qui active l'actionneur de commande de rebond (140), qui détend la tige de commande de rebond (126a) pour attraper la masse (122).

3. Système selon la revendication 2, dans lequel la tige de commande de rebond (126a) vient en prise avec un chariot à impact (124) qui est en prise avec la masse (122).

4. Système selon la revendication (2), dans lequel le contrôleur (130) active une vanne à 3 voies qui libère la pression d'air qui étend le bras de commande de rebond.

5. Système selon la revendication 1, dans lequel la masse d'impact (122) est réglable.

6. Système selon la revendication 1, dans lequel l'ensemble de capteur (110) vient en prise avec la structure (90) à mesurer via un pied stabilisateur (142).

7. Système selon la revendication 6, dans lequel l'ensemble de capteur (110) s'étend depuis la remorque via l'activation d'un actionneur (141).

8. Système selon la revendication 1, dans lequel le dispositif à impact est commandé à l'aide d'un contrôleur (130).

9. Système selon la revendication 1, dans lequel l'ensemble de capteur (110) est commandé à l'aide d'un contrôleur (130).

10. Système selon la revendication 1, dans lequel l'ensemble de capteur (110) comprend un accéléromètre à ressort flottant (144).

11. Système selon la revendication 1, comprenant en outre un logiciel de traitement de données et un contrôle automatisé de la qualité des données, pour vérifier les dossiers de données enregistrés.

12. Système selon la revendication 11, dans lequel la vérification comprend la vérification du bruit erroné excessif, des canaux perdus, de la surcharge des cellules de charge et/ou de la synchronisation en temps opportun des acquisitions de données indépendantes.

13. Système selon la revendication 1, dans lequel l'ensemble de capteur (110) peut être étendu dans de multiples directions parallèles à la structure (90) avant de venir en prise avec la structure (90).

14. Système selon la revendication 1, comprenant en outre des capteurs de référence qui sont synchronisés avec le programme d'acquisition de données et situés sur la structure en un point d'amplitude modale élevée par rapport à d'autres emplacements sur la structure.

15. Système selon la revendication 1, dans lequel la masse (122) tombe le long des rails de guidage linéaires (121), et lors de la détection d'un rebond de la masse (122) après un impact sur une surface de frappe (127), le dispositif d'impact vient en prise avec des freins qui à leur tour viennent en prise avec les rails de guidage linéaires (121) et empêchent la masse (122) de rebondir dans la surface de frappe (127).
